# EUROPÄISCHE PATENTSCHRIFT

(11) **EP 0 927 327 B1**
(45) Veröffentlichungstag und Bekanntmachung des Hinweises auf die Patenterteilung: **24.07.2002**
(21) Anmeldenummer: 98924304.3
(22) Anmeldetag: 13.05.1998
(51) Int. Cl.: F25B 37/00, F25B 15/04

(54) **VERFAHREN UND ANLAGE ZUM ERZEUGEN VON KÄLTE UND/ODER WÄRME**
METHOD AND INSTALLATION FOR GENERATING COLD AND/OR HEAT
PROCEDE ET INSTALLATION POUR PRODUIRE DU FROID ET/OU DU CHAUD

(30) Priorität: 22.05.1997 DE 19721351
(43) Veröffentlichungstag der Anmeldung: 07.07.1999
(73) Patentinhaber: EES Erdgas Energiesysteme GmbH, 45355 Essen (DE)
(72) Erfinder: FRANZ, Alexander-Ivo, D-43481 Mülheim (DE); FÖRSTER, Manfred, D-45134 Essen (DE); GELESIC, Antun, D-41462 Neuss (DE)
(74) Vertreter: Miller, Toivo
(86) Internationale Anmeldenummer: EP9802792
(87) Internationale Veröffentlichungsnummer: WO9853259

(56) Entgegenhaltungen:
- DE-A- 3 432 888
- DE-A- 3 507 887
- DE-C- 842 797
- US-A- 2 056 818
- US-A- 3 641 784
- US-A- 5 033 274
- US-A- 5 237 839
- US-A- 5 557 946
- US-A- 5 586 442
- PATENT ABSTRACTS OF JAPAN vol. 016, no. 135 (M-1230), 6. April 1992 & JP 03 294768 A (HITACHI ZOSEN CORP), 25. Dezember 1991

## Beschreibung

Die Erfindung betrifft ein Verfahren zum Erzeugen von Kälte und/oder Wärme, bei dem
- eine aus Lösungsmittel und Kältemittel bestehende reiche Lösung unter Wärmezufuhr in eine arme Lösung und ein heißes dampfförmiges Kältemittel getrennt wird,
- das heiße dampfförmige Kältemittel unter Wärmeabgabe verflüssigt wird,
- das flüssige Kältemittel entspannt und unter Wärmeaufnahme zu kaltem dampfförmigem Kältemittel verdampft wird,
- das kalte dampfförmige Kältemittel von der armen Lösung angesaugt und in dieser unter Wärmeabgabe zur Bildung der reichen Lösung absorbiert wird und
- die reiche Lösung vor ihrer Trennung unter Druck gesetzt wird.

Die Erfindung richtet sich ferner auf eine Sorptionsanlage zum Erzeugen von Kälte und/oder Wärme, mit
- einem beheizten Austreiber,
- einem dem Austreiber nachgeschalteten Kältemittel-Kondensator,
- mindestens einem dem Kondensator nachgeschalteten Expansionsventil,
- einem an das Expansionsventil angeschlossenen Kältemittel-Verdampfer und
- einem Absorber, der mindestens eine von einem Kühlmedium durchströmte Kühlschlange enthält und einen Strahlapparat aufweist, dessen Düse über eine Leitung für arme Lösung mit dem Austreiber und dessen Saugraum mit dem Verdampfer verbunden sind, wobei der Absorber über eine Leitung für reiche Lösung unter Zwischenschaltung einer Pumpe mit dem Austreiber in Verbindung steht.

Ein Verfahren und eine Anlage zum Erzeugen von Kälte ist aus Dokument US-A-2 056 818 schon bekannt.

Beim Betrieb gemäß dem eingangs genannten Verfahren spielt der Absorptionsgrad eine wesentliche Rolle. Der Erfindung liegt daher die Aufgabe zugrunde, den Absorptionsgrad zu erhöhen.

Zur Lösung dieser Aufgabe ist das eingangs genannte Verfahren erfindungsgemäß dadurch gekennzeichnet, daß das kalte dampfförmige Kältemittel und die arme Lösung die Stufen der Tropfen-, Film- und Rieselabsorption durchlaufen. Die Kombination dieser Absorptionsstufen bietet die Möglichkeit, den Absorptionsgrad zu optimieren.

Dabei besteht eine wesentliche Weiterbildung des erfindungsgemäßen Verfahrens darin, daß die arme Lösung als von unten nach oben gerichteter Tröpfchenstrahl ausgedüst wird und dabei das kalte dampfförmige Kältemittel mitreißt, daß der Tröpfchen-Dampfstrahl umgelenkt und über Kühlflächen abgerieselt wird und daß eine sich anreichernde Lösung im unteren Bereich der Kühlflächen gesammelt wird.

Im Tröpfchen-Dampfstrahl ergibt sich eine große Kontaktfläche zwischen der armen Lösung und dem dampfförmigen Kältemittel, was für die Absorption ebenso förderlich ist wie der gleichzeitig erzielte hohe Turbulenzgrad. Bei der Umlenkung kommt es zu einer heftigen Verwirbelung und anschließend zu einer Filmbildung auf den Kühlflächen. Hieraus resultieren besonders günstige Wärmeübergangsverhältnisse.

Im Tröpfchenstrahl kommt es zu einer Umwandlung der Druckenergie der armen Lösung in kinetische Energie. Hieraus resultiert der auf das dampfförmige Kältemittel einwirkende Saugeffekt. Anschließend erfolgt die Rückumwandlung in Druckenergie, so daß es also zu einer Erhöhung des Absorptionsdruckes kommt. Auch dies trägt zur Steigerung des Absorptionsgrades bei.

Gleiches gilt für das Merkmal, daß zwischen dem kalten dampfförmigen Kältemittel und der sich anreichernden Lösung eine Tauchabsorption durchgeführt wird. Es bilden sich also Kältemittel-Dampfblasen im Lösungsmittel.

In Weiterbildung des erfindungsgemäßen Verfahrens wird vorgeschlagen, daß das flüssige Kältemittel in mindestens zwei Stufen zu kaltem dampfförmigen Kältemittel verdampft wird und daß das kalte dampfförmige Kältemittel der stromauf gelegenen Verdampfungsstufe(n) vom flüssigen Kältemittel abgetrennt und in die sich anreichernde Lösung eingeleitet wird. Dieser Teil des Kältemitteldampfes befindet sich also auf einem höheren Druckniveau als der aus dem Verdampfer angesaugte Kältemitteldampf. Er kann daher in die ebenfalls unter höherem Druck stehende sich anreichernde Lösung eingeblasen werden. Dies trägt wiederum zur Erhöhung des Absorptionsdrucks und damit des Absorptionsgrades bei.

Das Eindüsen des Kältemitteldampfes in die sich anreichernde Lösung geschieht vorteilhafterweise derart, daß sich eine Wirbelströmung in der Lösung bildet, die die Kontaktzeit zwischen den Dampfblasen und der Lösung erhöht. Zu letzterem trägt auch bei, daß die aufsteigenden Dampfblasen einen zick-zack-förmigen Weg durch die Lösung geführt werden.

Die durch die Absorption erzeugte reiche Lösung wird anschließend mehrstufig erwärmt, und zwar sowohl durch die bei der Absorption erzeugte Wärme als auch durch heißen Kältemitteldampf und heiße arme Lösung.

Vorteilhaft ist es ferner, einen Teil der reichen Lösung vor Ihrer Trennung mit der armen Lösung zusammenzuführen und zu rezirkulieren. Durch Einstellung der Rezirkulationsmenge läßt sich der Absorptionsdruck bei Leistungsänderungen regeln.

Die erfindungsgemäße Sorptionsanlage ist zur Lösung der gestellten Aufgabe dadurch gekennzeichnet, daß die Düse des Strahlapparates von unten nach oben gegen eine Umlenkwand gerichtet ist und daß die Umlenkwand gegen das obere Ende der Kühlschlange gerichtet ist.

Aus der Düse tritt ein Tröpfchenstrahl an armer Lösung aus, der Kältemitteldampf mitreißt und sich mit diesem mischt. Bereits hier beginnt der Absorptionsvorgang. Anschließend trifft der Tröpfchen-Dampfstrahl auf die Umlenkwand, wobei sich auf dieser ein Film bildet, der mit zunehmendem Abstand vom Auftreffpunkt dünner wird. Gleichzeitig kommt es zu einer Verwirbelung der Tröpfchen-Dampfströmung. Die Lösung trifft anschließend auf die Kühlschlange und rieselt an dieser unter Filmbildung nach unten. Große Kontaktflächen, hohe Turbulenz und sehr gute Wärmeübergangsverhältnisse zeichnen diese Betriebsweise aus.

Vorteilhafterweise schließt sich an den Saugraum des Strahlapparates ein Diffusor an, an dessen oberem Ende eine konzentrische Leitblechanordnung mit einem einer konzentrischen Kühlschlange zugeordneten Durchlaß vorgesehen ist. Der Diffusor trägt dazu bei, den im Strahlapparat erzeugten dynamischen Druck wieder in statischen Druck umzuwandeln und dadurch den Absorptionsdruck zu erhöhen. Im übrigen ergibt sich außerhalb des Diffusors ein Raum, der im wesentlichen frei ist von Lösungsmitteltröpfchen. Letztere werden nämlich von der Umlenkwand an die Leitblechanordnung abgegeben und von dieser oben auf die Kühlschlange gelenkt. Der Wärmeübergang vermindert sich also nicht durch abspritzende Tröpfchen.

Sind mehrere konzentrische Kühlschlangen vorgesehen, so weist die Leitblechanordnung eine entsprechend Anzahl von konzentrischen Durchlässen auf.

Besonders vorteilhaft ist es, wenn der Saugraum des Strahlapparates mindestens eine zusätzliche Saugöffnung aufweist, die mit dem Raum außerhalb des Diffusors in Verbindung steht. Der Strahlapparat saugt also denjenigen Kältemitteldampf in die Tröpfchenströmung zurück, der sich im Raum der Kühlschlange befindet. Die zusätzliche Saugöffnung ist dabei vorzugsweise in ihrer Größe verstellbar.

Bei einem bevorzugten Ausführungsbeispiel ist die Umlenkwand eine rotationssymmetrische Kappe mit einer zentralen, nach unten gegen die Düse gerichteten Spitze, die einen toroidalen Wirbel hoher Intensität erzeugt. Dabei wird ferner vorgeschlagen, die Umlenkwand zu kühlen.

Eine wesentliche Weiterbildung der Erfindung besteht darin, daß dem Expansionsventil ein Drosselventil und eine Trenneinrichtung vorgeschaltet ist, wobei letztere einen Auslaß für flüssige Phase und einen Auslaß für dampfförmige Phase aufweist, daß der Auslaß für flüssige Phase an das Expansionsventil angeschlossen ist und daß der Auslaß für dampfförmige Phase mit dem unteren Bereich des Absorbers in Verbindung steht. Es wird also dampfförmiges Kältemittel unter einem Druck, der über dem des Verdampfers liegt, in die am Boden des Absorbers stehende, bereits angereicherte Lösung eingeleitet. Hier bilden sich Dampfblasen, die zu einer intensiven Tauchabsorption führen.

Außerdem läßt sich eine starke Wirbelströmung dadurch erzeugen, daß der Auslaß für dampfförmige Phase der Trenneinrichtung tangential in den unteren Bereich des Absorbers hineinführt. Dies erhöht die Kontaktzeiten zwischen den Dampfblasen und der Lösung.

Hierzu trägt auch bei, daß der untere Bereich des Absorbers mit übereinander angeordneten Böden versehen ist, die abwechselnd eine innenliegende und eine außenliegende Durchlaßöffnung definieren.

Die Kühlschlange dient, wie erwähnt, zum Abführen der Kondensations- und Lösungswärme. Diese Wärme kann vollständig an externe Wärmeverbraucher abgegeben werden. Vorteilhafter hingegen ist es, die Kühlschlange mindestens teilweise in die Leitung für die reiche Lösung einzubinden. Die unten aus dem Absorber abgezogene reiche Lösung wird also von der Pumpe durch die Kühlschlange gefördert und erfährt hier eine erste Erwärmung.

Nach einem weiteren vorteilhaften Merkmal wird die reiche Lösung anschließend durch eine Kopfkammer geleitet, die sich oberhalb der Umlenkwand befindet. Dadurch wird die Umlenkwand gekühlt und die reiche Lösung einem zweiten Erwärmungsschritt unterworfen. Um den Wärmeübergang zu verbessern, wird die reiche Lösung tangential in die Kopfkammer hineingeführt und zentral abgezogen.

In Weiterbildung der Erfindung wird schließlich vorgeschlagen, daß die Leitung für die reiche Lösung stromab der Pumpe über eine steuerbare Abzweigleitung mit der Leitung für arme Lösung verbunden ist. Ein Teil der reichen Lösung wird also in den Strahlapparat des Absorbers rezirkuliert, wodurch sich der Absorptionsdruck bei Leistungsänderung regeln läßt.

Die Erfindung wird im folgenden anhand eines bevorzugten Ausführungsbeispiels im Zusammenhang mit der beiligenden Zeichnung näher erläutert. Die Zeichnung zeigt in:

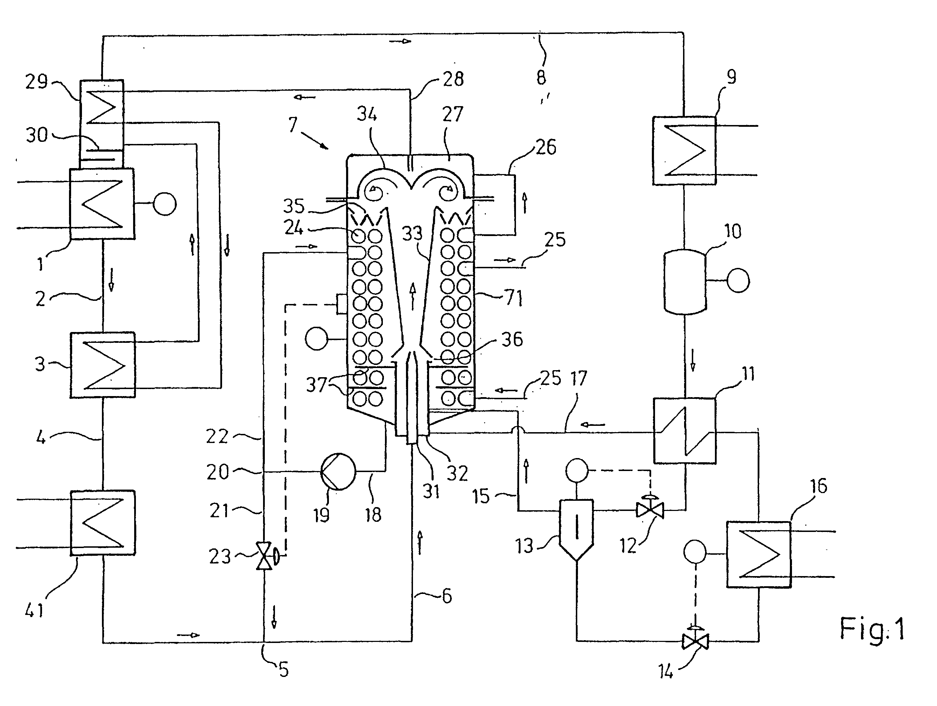

Fig. 1 ein Fließschema einer Sorptionsanlage.

Die dargestellte Anlage eignet sich vor allen Dingen für solche Anwendungsfälle, in denen gleichzeitig Wärme- und Kälteverbraucher zu versorgen sind. Diese Verhältnisse sind beispielsweise auf Schlachthöfen gegeben. Bevorzugt wird die Sorptionsanlage mit einem Blockkraftheizwerk kombiniert, wobei die Energie zum Betreiben der Sorptionsanlage aus der Abwärme des Kraftwerks gewonnen werden kann, z.B. aus dem Abgas eines Gasmotors.

Die Abwärme dient zum Beheizen eines Austreibers 1, der eine reiche Lösung enthält, die im vorliegenden Fall aus Wasser als Lösungsmittel und Ammoniak als Kältemittel besteht.

Im Austreiber 1 erfolgt unter Wärmezufuhr eine Abtrennung des Kältemittels vom Lösungsmittel. Letzteres verläßt als heiße arme Lösung den Austreiber 1 über eine Leitung 2 und gelangt zu einem Wärmetauscher 3, in welchem die arme Lösung gekühlt wird. An den Wärmetauscher 3 schließt sich eine Leitung 4 an, die über einen weiteren Wärmetauscher 41 zu einer Mischstelle 5 führt. Mit dem Wärmetauscher 41 kann die Menge des am Absorbereintritt absorbierten Kältemitteldampfes beeinflußt werden. Von der Mischstelle 5 gelangt die arme Lösung über eine Leitung 6 zu einem Absorber 7.

Das im Austreiber 1 ausgetriebene Kältemittel wird als heißer Kältemitteldampf über eine Leitung 8 zu einem Kondensator 9 geführt. Hier erfolgt unter gleichzeitiger Abkühlung eine Verflüssigung des Kältemittels. Die frei werdende Überhitzung- und Verflüssigungswärme kann einem Wärmeverbraucher zugeführt werden. Ferner kann das nun flüssige Kältemittel unterkühlt werden, um den Gesamtwirkungsgrad der Anlage zu steigern.

An den Kondensator 9 schließt sich ein Sammler 10 an, der volumetrische Schwankungen im Kältemittelkreis kompensiert, wie sie beispielsweise bei Leistungsänderungen auftreten.

Vom Sammler 10 gelangt das Kältemittel zu einem Nachkühler 11, in welchem eine weitere Unterkühlung stattfindet, die den Wirkungsgrad des Kreisprozesses verbessert.

Sodann wird das Kältemittel einem Drosselventil 12 zugeführt, in welchem der hohe Verflüssigungsdruck auf den Absorptionsdruck reduziert wird. Dabei entsteht ein Gemisch aus flüssigem und dampfförmigem Kältemittel. Eine entsprechende Phasentrennung erfolgt in einer nachgeschalteten Trenneinrichtung 13. Die flüssige Phase wird einem Expansionsventil 14 zugeführt, während die dampfförmige Phase über eine Leitung 15 in den Absorber 7 gelangt.

Am Expansionsventil erfolgt die Druckabsenkung auf den Verdampfungsdruck. Das Kältemittel gelangt anschließend in einen Verdampfer 16, in dem unter entsprechender Wärmeaufnahme die Verdampfung des Kältemittels erfolgt. Der Verdampfer 16 ist an einen Kälteverbraucher angeschlossen, der die Verdampfungswärme liefert. Bei dem Kälteverbraucher handelt es sich um einen solchen, der mit Tiefkühlung arbeitet.

Der kalte Kältemitteldampf wird über den Nachkühler 11 geleitet, wo er Wärme aus dem Kältemittelkondensat aufnimmt, und gelangt sodann über eine Leitung 17 zum Absorber 7.

In letzterem wird der Kältemitteldampf von der armen Lösung unter Wärmeabgabe absorbiert, wobei sich die entstehende reiche Lösung im unteren Bereich des Absorbers sammelt.

Von hier aus wird die reiche Lösung über eine Leitung 18 abgezogen, und zwar von einer Pumpe 19. Stromab der Pumpe 19 liegt eine Abzweigstelle 20, von der Leitungen 21 und 22 abgehen. Die Leitung 21 enthält ein Regelventil 23 und führt zur Mischstelle 5, wo ein Teil der reichen Lösung der armen Lösung beigemischt und in den Absorber 7 rezirkuliert wird. Auf diese Weise lassen sich Druckänderungen kompensieren, die aus Leistungsänderungen resultieren. Die arme Lösung wird durch die reiche Lösung weiter abgekühlt.

Die Leitung 22 führt zu einer Kühlschlange 24, die im Inneren des Absorbers 7 angeordnet ist und dazu dient, einen Teil der im Absorber entstehenden Absorptions- und Unterkühlungswärme in die reiche Lösung einzutragen. Der übrige Teil dieser Wärme wird durch eine weitere Kühlschlange 25 abgeführt, die hier durch ihre Vorlauf- und Rücklaufleitungen angedeutet ist. Sie dient zur Versorgung eines Wärmeverbrauchers.

Die Kühlschlange 24 ist über eine Leitung 26 an eine Kopfkammer 27 des Absorbers 7 angeschlossen. Von der Kopfkammer 27 geht zentral eine Leitung 28 ab, die zu einem Dephlegmator 29 führt. Hier tritt die reiche Lösung mit dem heißen dampfförmigen Kältemittel in Wärmeaustausch. Dabei wird dem Kältemitteldampf Wärme entzogen, was zu einer Auskondensation von Wasser und damit zu einer Erhöhung der Kältemittelkonzentration führt.

Vom Dephlegmator 29 aus gelangt die reiche Lösung zum Wärmetauscher 3, wo sie nochmals erwärmt wird, und schließlich zu einer unterhalb des Dephlegmators angeordneten Säule, wo sie über Böden 30 geleitet und in den Austreiber 1 eingeführt wird. Dabei kommt es auch hier zu einer Kondensation von Wasserdampf und zu einem Stoffaustausch, der eine Erhöhung der Kältemittelkonzentration zur Folge hat.

Wie erwähnt, dient die Leitung 6 dazu, die abgekühlte arme Lösung, ggfs. gemischt mit reicher Lösung, dem Absorber 7 zuzuführen. An die Leitung 6 schließt sich eine Düse 31 an, die im Absorber 7 von unten nach oben gerichtet ist und in eine Saugkammer 32 mündet. Der aus der Düse austretende Strahl von Kältemitteltröpfchen erzeugt in der Saugkammer 32 einen Unterdruck, der unterhalb des Verdampfungsdrucks des Kältemittels im Verdampfer 16 liegt. Da die Leitung 17 an die Saugkammer 32 angeschlossen ist, wird also der im Nachkühler 11 überhitzte Kältemitteldampf beschleunigt in den Absorber hineingesaugt und vom Tröpfchenstrahl der armen Lösung mitgerissen und verdichtet. Hier beginnt bereits der erste Schritt der Absorption, bei der es sich um eine Tropfenabsorption handelt. Sie findet bei hoher Turbulenz statt.

Die Düse 31 verwandelt die potentielle Energie der armen Lösung in kinetische Energie, wobei letztere in einem an die Saugkammer 32 anschließenden Diffusor 33 wieder in Druckenergie zurückverwandelt wird. Der Absorberdruck liegt also über dem Verdampfungsdruck, wodurch sich der Absorptionsgrad entsprechend steigert. Auch kommt es zu einer Kontaktflächen-Vergrößerung, bedingt durch den Massenunterschied und den daraus resultierenden Geschwindigkeitsunterschied. Die arme Lösung ist unterkühlt und absorbiert sofort Kältemitteldampf bis zum Einreichen einer Sättigungstemperatur.

Der im Diffusor 33 aufsteigende Tröpfchen-Dampfstrahl trifft auf eine Umlenkwand 34, die die untere Begrenzung der Kopfkammer 27 bildet und dementsprechend von der durch die Kopfkammer strömenden reichen Lösung gekühlt wird. Die Kühlung ist intensiv, zumal die Leitung 26 tangential in die Kopfkammer 27 einmündet und in letzterer eine Rotationströmung erzeugt. Es ergibt sich ein vorzüglicher Wärmeübergang, was ebenfalls zur Steigerung des Absorptionsgrades beiträgt.

Die Umlenkwand 34 ist derart geformt, daß sich ein torusförmiger Ringwirbel hoher Turbulenz bildet, wodurch wiederum die Absorption gefördert wird. Neben der Tropfenabsorption kommt es hier bereits zu einer Filmabsorption, da sich nämlich die Lösung als Film mit nach außen hin abnehmender Dicke an die Umlenkwand 34 anlegt.

Unterhalb des äußeren Randes der Umlenkwand 34 ist eine Leitblechanordnung 35 vorgesehen, die einen Abschluß zwischen dem oberen Rand des Diffusors 33 und dem Mantel 71 des Absorbers 7 bildet. Die Leitblechanordnung 35 beruhigt die turbulente Strömung und weist Schlitze auf, die die abtropfende Lösung direkt und gleichmäßig auf die oberen Windungen der Kühlschlangen 24 und 25 leitet. Die Lösung bildet also Filme auf den Kühlschlangen und rieselt gleichzeitig an diesen nach unten. Neben der Filmabsorption kommt es also ferner zu einer Rieselabsorption.

Die Anordnung ist insgesamt so getroffen, daß die gesamte Flüssigkeit im Raum unterhalb der Leitblechanordnung 35 und außerhalb des Diffusors 33 an den Kühlschlangen 24 und 25 haftet. Dementsprechend kommt es zu einem sehr guten Wärmeübergang, der nicht durch abspritzende Tropfen beeinträchtigt wird. Der freie Raum ist gefüllt mit Kältemitteldampf. Um hier ein hohes Maß an Turbulenz zu erzeugen und außerdem den Kältemitteldampf in die arme Lösung zurückzusaugen, weist die Saugkammer 32 eine ringförmige Öffnung 36 auf, deren Durchlaßquerschnitt durch einen hier nicht gezeigten Ring verändert werden kann.

Wie oben bereits angedeutet, arbeitet die Erfindung mit zweistufiger Kältemitteldampfabsaugung, und zwar zum einen über die Leitung 17 und die Saugkammer 32 unter Wirkung der Düse 31, und zum anderen über die Leitung 15, die die aus der Trenneinrichtung 13 kommende dampfförmige Phase führt-Der durch das Drosselventil 12 eingestellte Druck liegt über dem Verdampfungsdruck und auch über dem Druck im unteren Bereich des Absorbers 7. Der Kältemitteldampf kann also aus der Leitung 15 in die im unteren Bereich des Absorbers stehende, sich anreichernde Lösung eingesaugt bzw. eingedüst werden. Dies geschieht tangential, so daß es also zu einer heftigen Verwirbelung der Flüssigkeit kommt. Der Kältemitteldampf bildet Blasen in der Lösung, woraus eine intensive Tauchabsorption unter erhöhtem Druck resultiert. Die Blasen steigen in der Lösung auf, wobei sie von den Böden 37 zu einer hin und her gehenden Wanderung gezwungen werden. Der untere Boden besitzt nämlich lediglich eine zentrale, die Saugkammer 32 umgebende Öffnung, während der obere Boden lediglich am Mantel 71 des Absorbers einen Ringspalt bildet. Trotz der niedrigen Flüssigkeitssäule kommt es zu einer sehr guten Tauchabsorption, bedingt durch die unterschiedlichen Strömungsgeschwindigkeiten und -richtungen der beiden Komponenten und die daraus resultierende große Kontaktfläche.

Da sich die Kühlschlangen 24 und 25 auch in den Sumpf des Absorbers hineinerstrecken, wird die entstehende Kondensations- und Lösungswärme auch in diesem Bereich direkt an die Kühlschlangen abgegeben.

Die zweistufige Kältemitteldampfabsaugung läßt eine Absorption bei zwei unterschiedlichen Verdampfungstemperaturen zu. Hinter dem Drosselventil 12 herscht ein Druck, der höher ist als der Verdampfungsdruck hinter dem Expansionsventil 14. Hinter letzterem entsteht eine Mischung, die einen hohen Anteil an Flüssigkeit und sehr wenig Dampf enhält. Das Dampf-Flüssigkeitsverhältnis ist vom Verdampfungsdruck, dem Verflüssigungsdruck und der Unterkühlungstemperatur abhängig. Insbesondere bei tiefer Kühlung ist der größte Teil des Dampfes, der bei der Expansion auf den Verdampfungsdruck entsteht, schon über die Trenneinrichtung 13 in den tiefsten Punkt des Absorbers 7 eingeleitet worden, und zwar unter erhöhtem Druck. Auch der Druck im Absorber liegt über dem Verdampfungsdruck, wobei noch der Druck der Flüssigkeitsäule hinzuzählen ist. In den Verdampfer strömt lediglich ein kleines Dampfvolumen als Ballast ein, wodurch der Verdampfungskoeffizient groß und das Verdampfer-Volumen klein wird. Der aus der Trenneinrichtung 13 abgeführte Dampf wird ohne Energieverbrauch bei einem Druck absorbiert, der über dem Verdampfungsdruck liegt. Dies verbessert den Absorptionskoeffizienten. Genau um diese Dampfmenge mindert sich diejenige Dampfmenge, die der Strahlapparat aus dem Verdampfer 16 absaugen muß. Der Absorber 7 kann entsprechend kleiner dimensioniert werden.

Im Rahmen der Erfindung sind durchaus Abwandlungsmöglichkeiten gegeben. Im Falle des Ausführungsbeispiels wird der Austreiber zwar mit dem Abgas eines Gasmotors beheizt, jedoch sind auch andere Wärmequellen denkbar. Ferner zeigt Fig. 1 einen Absorber mit zwei konzentrischen Kühlschlangensätzen. Diese Zahl läßt sich ohne weiteres variieren, wobei in jedem Fall dafür zu sorgen ist, daß die oberhalb der Kühlschlangen liegende Leitblechanordnung eine entsprechende Anzahl von ringförmigen Durchlaßöffnungen aufweist. Die Umlenkwand nach Fig. 1 ist rotationssymmetrisch ausgebildet und weist eine gegen die Düse gerichtete Spitze auf. Bei nicht konzentrischer Ausbildung des Absorbers und seiner Einbauten sind auch andere Konfigurationen möglich. Wichtig im Zusammenhang mit der Umlenkwand ist ferner, daß an dieser Stelle Wärme aus dem Absorber abgeführt wird. Im vorliegenden Fall gelangt diese Wärme in die reiche Lösung, was energetisch sehr günstig ist. Alternativ kann auch mit Kühlwasser gearbeitet werden, wobei dann die Wärme in die Umgebung oder an einen Verbraucher geht.

## Patentansprüche

1. Verfahren zum Erzeugen von Kälte und/oder Wärme, bei dem
- eine aus Lösungsmittel und Kältemittel bestehende reiche Lösung unter Wärmezufuhr in eine arme Lösung und ein heißes dampfförmiges Kältemittel getrennt wird,
- das heiße dampfförmige Kältemittel unter Wärmeabgabe verflüssigt wird,
- das flüssige Kältemittel entspannt und unter Wärmeaufnahme zu kaltem dampfförmigem Kältemittel verdampft wird,
- das kalte dampfförmige Kältemittel von der armen Lösung angesaugt und in dieser unter Wärmeabgabe zur Bildung der reichen Lösung absorbiert wird und
- die reiche Lösung vor ihrer Trennung unter Druck gesetzt wird,
**dadurch gekennzeichnet,**
- **daß** das kalte dampfförmige Kältemittel und die arme Lösung die Stufen der Tropfen-, Film- und Rieselabsorption durchlaufen.

2. Verfahren nach Anspruch 1, **dadurch gekennzeichnet, daß** die arme Lösung als von unten nach oben gerichteter Tröpfchenstrahl ausgedüst wird und dabei das kalte dampfförmige Kältemittel mitreißt, daß der Tröpfchen-Dampfstrahl umgelenkt und über Kühlflächen abgerieselt wird und daß eine sich anreichernde Lösung im unteren Bereich der Kühlflächen gesammelt wird.

3. Verfahren nach Anspruch 1 oder 2, **dadurch gekennzeichnet, daß** zwischen dem kalten dampfförmigen Kältemittel und der sich anreichernden Lösung eine Tauchabsorption durchgeführt wird.

4. Verfahren nach Anspruch 3, **dadurch gekennzeichnet, daß** das flüssige Kältemittel in mindestens zwei Stufen zu kaltem dampfförmigen Kältemittel verdampft wird und daß das kalte dampfförmige Kältemittel der stromauf gelegenen Verdampfungsstufe(n) vom flüssigen Kältemittel abgetrennt und in die sich anreichernde Lösung eingeleitet wird.

5. Verfahren nach Anspruch 4, **dadurch gekennzeichnet, daß** das kalte dampfförmige Kältemittel der stromauf gelegenen Verdampfungsstufe(n) unter Erzeugung einer Wirbelströmung in die sich anreichernde Lösung eingedüst wird.

6. Verfahren nach einem der Ansprüche 1 bis 5, **dadurch gekennzeichnet, daß** ein Teil der reichen Lösung vor ihrer Trennung mit der armen Lösung zusammgeführt und rezirkuliert wird.

7. Sorptionsanlage zum Erzeugen von Kälte und/oder Wärme, mit
- einem beheizten Austreiber (1),
- einem dem Austreiber nachgeschalteten Kältemittel-Kondensator (9),
- mindestens einem dem Kondensator nachgeschalteten Expansionsventil (14),
- einem an das Expansionsventil angeschlossenen Kältemittel-Verdampfer (16) und
- einem Absorber (7), der mindestens eine von einem Kühlmedium durchströmte Kühlschlange (24, 25) enthält und einen Strahlapparat (31 - 33) aufweist, dessen Düse (31) über eine Leitung (6) für arme Lösung mit dem Austreiber (1) und dessen Saugraum (32) mit dem Verdampfer (16) verbunden sind, wobei der Absorber über eine Leitung (18) für reiche Lösung unter Zwischenschaltung einer Pumpe (19) mit dem Austreiber (1) in Verbindung steht,
**dadurch gekennzeichnet,**
**daß** die Düse (31) des Strahlapparates (31 - 33) von unten nach oben gegen eine Umlenkwand (34) gerichtet ist und daß die Umlenkwand gegen das obere Ende der Kühlschlange (24, 25) gerichtet ist.

8. Sorptionsanlage nach Anspruch 7, **dadurch gekennzeichnet, daß** sich an den Saugraum (32) des Strahlapparates ein Diffusor (33) anschließt, an dessen oberem Ende eine konzentrische Leitblechanordnung (35) mit einem einer konzentrischen Kühlschlange (24, 25) zugeordneten Durchlaß vorgesehen ist.

9. Sorptionsanlage nach Anspruch 8, **dadurch gekennzeichnet, daß** der Saugraum (32) des Strahlapparates mindestens eine zusätzliche Saugöffnung (36) aufweist, die mit einem Raum außerhalb des Diffusors (33) in Verbindung steht.

10. Sorptionsanlage nach Anspruch 9, **dadurch gekennzeichnet, daß** die zusätzliche Saugöffnung (36) in ihrer Größe verstellbar ist.

11. Sorptionsanlage nach einem der Ansprüche 7 bis 10, **dadurch gekennzeichnet, daß** die Umlenkwand (34) eine rotationssymmetrische Kappe mit einer zentralen, nach unten gegen die Düse (31) gerichteten Spitze ist.

12. Sorptionsanlage nach einem der Ansprüche 7 bis 11, **dadurch gekennzeichnet, daß** dem Expansionsventil (14) ein Drosselventil (12) und eine Trenneinrichtung (13) vorgeschaltet sind, wobei letztere einen Auslaß für flüssige Phase und einen Auslaß (15) für dampfförmige Phase aufweist, daß der Auslaß (15) für flüssige Phase an das Expansionsventil (14) angeschlossen ist und daß der Auslaß (15) für dampfförmige Phase mit dem unteren Bereich des Absorbers (7) in Verbindung steht.

13. Sorptionsanlage nach Anspruch 12, **dadurch gekennzeichnet, daß** der Auslaß (15) für dampfförmige Phase der Trenneinrichtung (13) tangential in den unteren Bereich des Absorbers (7) hineinführt.

14. Sorptionsanlage nach Anspruch 12 oder 13, **dadurch gekennzeichnet, daß** der untere Bereich des Absorbers (7) mit übereinander angeordneten Böden (37) versehen ist, die abwechselnd eine innenliegende und eine außenliegenden Durchlaßöffnung definieren.

15. Sorptionsanlage nach einem der Ansprüche 7 bis 14, **dadurch gekennzeichnet, daß** die Kühlschlange (24, 25) mindestens teilweise in die Leitung für die reiche Lösung eingebunden ist.

16. Sorptionsanlage nach einem der Ansprüche 7 bis 15, **dadurch gekennzeichnet, daß** die Umlenkwand (34) den unteren Abschluß einer Kopfkammer (27) bildet, die in die Leitung für die reiche Lösung eingebunden ist.

17. Sorptionsanlage nach Anspruch 15, **dadurch gekennzeichnet, daß** die Leitung für die reiche Lösung tangential in die Kopfkammer (27) hineinführt.

18. Sorptionsanlage nach einem der Ansprüche 7 bis 16, **dadurch gekennzeichnet, daß** die Leitung für die reiche Lösung stromab der Pumpe (19) über eine steuerbare Abzweigleitung (21) mit der Leitung (6) für die arme Lösung verbunden ist.

## Claims

1. A method for producing cold and/or heat, in which
- a rich solution consisting of solvent and refrigerant is separated by supply of heat into a weak solution and a hot vaporous refrigerant;
- the hot vaporous refrigerant is liquefied under heat emission;
- the liquid refrigerant is relaxed and is evaporated under heat absorption into a cold vaporous refrigerant;
- the cold vaporous refrigerant is sucked in by the weak solution and is absorbed in the same under heat emission for the purpose of forming the rich solution, and
- the rich solution is pressurized prior to its separation, **characterized in that**
- the cold vaporous refrigerant and the weak solution pass through the stages of mist, film and trickling absorption.

2. A method as claimed in claim 1, **characterized in that** the weak solution is ejected as a jet of droplets directed upwardly from below and thereby entrains the cold vaporous refrigerant, that the droplet-vapor jet is deflected and is allowed to trickle down over cooling surfaces and that an enriching solution is collected in the lower zone of the cooling surfaces.

3. A method as claimed in claim 1 or 2, **characterized in that** an immersion absorption is performed between the cold vaporous refrigerant and the enriching solution.

4. A method ag claimed in claim 3, **characterized in that** the liquid refrigerant is evaporated in at least two stages into cold vaporous refrigerant and that the cold vaporous refrigerant of the upstream evaporation stage(s) is separated from the liquid refrigerant and is introduced into the enriching solution.

5. A method as claimed in claim 4, **characterized in that** the cold vaporous refrigerant of the upstream evaporation stage(s) is injected into the enriching solution under production of an eddy flow.

6. A method as claimed in one of the claims 1 to 5, **characterized in that** a part of the rich solution is joined with the weak solution prior to its separation and is recirculated.

7. A sorption installation for producing cold and/or heat, comprising a heated generator (1);
- a refrigerant condenser (9) downstream of the generator;
- at least one expansion valve (14) downstream of the condenser;
- a refrigerant evaporator (16) connected to the expansion valve, and
- an absorber (7) which comprises at least one cooling spiral (24, 25) which is flowed through by a refrigerating medium and comprises a jet apparatus (31 - 33) whose nozzle (31) is connected via a line (6) for the weak solution with the generator (1) and whose suction chamber (32) is connected with the evaporator (16), with the absorber being in connection with the generator (1) via a line (18) for the rich solution by interposing a pump (19),
**characterized in that**
the nozzle (31) of the jet apparatus (31 - 33) is directed upwardly from below against a deflection wall (34) and that the deflection wall is directed against the upper end of the cooling spiral (24, 25).

8. A sorption installation as claimed in claim 7, **characterized in that** a diffuser (33) is adjacent to the suction chamber (32) of the jet apparatus, at the upper end of which there is disposed a concentric arrangement of baffle plates (35) with a passage associated with a concentric cooling coil (24, 25).

9. A sorption installation as claimed in claim 8, **characterized in that** the suction chamber (32) of the jet apparatus is provided with at least one additional suction opening (36) which is in connection with a chamber outside of the diffuser (33).

10. A sorption installation as claimed in claim 9, **characterized in that** the additional suction opening (36) is adjustable in its size.

11. A sorption installation as claimed in one of the claims 7 to 10, **characterized in that** the deflection wall (34) is a rotationally symmetrical cap with a central tip facing downwardly against the nozzle (31).

12. A sorption installation as claimed in one of the claims 7 to 11, **characterized in that** the expansion valve (14) is provided upstream with a throttle valve (12) and a separating device (13), with the latter being provided with an outlet for liquid phase and an outlet (15) for the vapor phase, that the outlet (15) for the liquid phase is connected to the expansion valve (14) and that the outlet (15) for the vapor phase is in connection with the lower zone of the absorber (7).

13. A sorption installation as claimed in claim 12, **characterized in that** the outlet (15) for the vapor phase of the separating device (13) leads tangentially into the lower zone of the absorber (7).

14. A sorption installation as claimed in claim 12 or 13, **characterized in that** the lower zone of the absorber (7) is provided with floors (37) which are disposed above one another and alternatingly define an interior and exterior pass-through opening.

15. A sorption installation as claimed in one of the claims 7 to 14, **characterized in that** the cooling coil (24, 25) is incorporated at least partly in the line for the rich solution.

16. A sorption installation as claimed in one of the claims 7 to 15, **characterized in that** the deflection wall (34) forms the lower end of a head chamber (27) which is incorporated in the line for the rich solution.

17. A sorption installation as claimed in claim 15, **characterized in that** the line for the rich solution leads tangentially into the head chamber (27).

18. A sorption installation as claimed in one of the claims 7 to 16, **characterized in that** the line for the rich solution is connected downstream of the pump (19) via a controllable branch line (21) with the line (6) for the weak solution.

## Revendications

1. Procédé pour la production de froid et/ou de chaleur, dans lequel :
- une solution composée de solvant et de réfrigérant est séparée sous apport de chaleur en une solution pauvre et un réfrigérant chaud sous forme de vapeur,
- le réfrigérant chaud sous forme de vapeur est liquéfié en libérant de la chaleur,
- le réfrigérant liquide est détendu et évaporé avec absorption de chaleur pour donner un réfrigérant froid sous forme de vapeur,
- le réfrigérant froid sous forme de vapeur est aspiré par la solution pauvre et absorbé par celle-ci en libérant de la chaleur pour donner la solution riche, et
- la solution riche est pressurisée avant sa séparation,
cartectérisé en ce que le solvant froid sous forme de vapeur et la solution pauvre passent par des stades d'absorption de gouttelettes, pelliculaire et de ruissellement.

2. Procédé selon la revendication 1, **caractérisé en ce que** la solution pauvre est éjectée sous la forme d'un jet de gouttelettes orienté de bas en haut et entraîne alors le réfrigérant froid sous forme de vapeur, **en ce que** le jet de gouttelettes et de vapeur est dévié et ruisselle sur des surfaces de refroidissement et **en ce qu'**une solution en voie d'enrichissement s'accumule dans la partie inférieure des surfaces de refroidissement.

3. Procédé selon la revendication 1 ou 2, **caractérisé en ce qu'**une absorption par immersion est effectuée entre le réfrigérant froid sous forme de vapeur et la solution en voie d'enrichissement.

4. Procédé selon la revendication 3, **caractérisé en ce que** le réfrigérant liquide est évaporé en deux temps au moins pour donner le réfrigérant froid sous forme de vapeur et **en ce que** le réfrigérant froid sous forme de vapeur du (des) étage(s) situé(s) en amont est séparé du réfrigérant liquide et amené dans la solution en voie d'enrichissement.

5. Procédé selon la revendication 4, **caractérisé en ce que** le réfrigérant froid sous forme de vapeur du (des) étage(s) situé(s) en amont est injecté dans la solution en voie d'enrichissement en créant un courant tourbillonnaire.

6. Procédé selon l'une quelconque des revendications 1 à 5, **caractérisé en ce qu'**une partie de la solution riche est réunie à la solution pauvre et remise en circulation avant sa séparation.

7. Installation à sorption pour la production de froid et/ou de vapeur, comprenant :
- un éjecteur (1) chauffé,
- un condenseur de réfrigérant (9) monté en aval de l'éjecteur,
- au moins une soupape d'expansion (14) montée en aval du condenseur,
- un évaporateur de réfrigérant (16) raccordé à la vanne d'expansion
- et un absorbeur (7) qui contient au moins un serpentin de refroidissement (24, 25) parcouru par un fluide réfrigérant et présente un appareil à jet (31-33) dont le gicleur (31) communiqua avec l'éjecteur (1) par une conduite (5) pour la solution pauvre et dont l'espace d'aspiration (32) communique avec l'évaporateur (16), l'absorbeur (7) étant relié par une conduite (18) pour la solution riche à l'éjecteur (1) avec interposition d'une pompe (19),
**caractérisée en ce que** le gicleur (31) de l'appareil à jet (31-33) est orienté de bas en haut vers une cloison de déviation (34) et **en ce que** la cloison de déviation est orientée vers l'extrémité supérieure du serpentin de refroidissement (24, 25).

8. Installation à sorption selon la revendication 7, **caractérisée en ce que** l'espace d'aspiration (32) de l'appareil à jet se raccorde à un diffuseur (33) dont l'extrémité supérieure porte une disposition concentrique de tôles de chicane (35) avec un passage associé à un serpentin de refroidissement (24, 25) concentrique.

9. Installation à sorption selon la revendication 8, **caractérisée en ce que** l'espace d'aspiration (32) de l'appareil à jet présente au moins une ouverture d'aspiration supplémentaire (36) qui communique avec un espace situé à l'extérieur du diffuseur (33).

10. Installation à sorption selon la revendication 9, **caractérisée en ce que** l'ouverture d'aspiration supplémentaire (36) a une taille réglable.

11. Installation à sorption selon l'une quelconque des revendications 7 à 10, **caractérisée en ce que** la cloison de déviation (34) est un capuchon symétrique dans le sens de la rotation avec une pointe centrale orientée vers le bas en direction du gicleur (31).

12. Installation à sorption selon l'une quelconque des revendications 7 à 1, **caractérisée en ce que** la soupape d'expansion (14) est précédée d'une soupape d'étranglement (12) et d'un dispositif séparateur (13) qui présente une sortie pour la phase liquide et une sortie (15) pour la phase vapeur, **en ce que** la sortie (15) pour la phase vapeur est reliée à la soupape d'expansion (14) et **en ce que** la sortie (15) pour la phase vapeur communique avec la partie inférieure de l'absorbeur (7).

13. Installation à sorption selon la revendication 12, **caractérisée en ce que** la sortie (15) du dispositif séparateur (13) destinée à la phase vapeur pénètre de façon tangente dans la partie inférieure de l'absorbeur (7).

14. Installation à sorption selon la revendication 12 ou 13, **caractérisée en ce que** la partie inférieure de l'absorbeur (7) est pourvue de fonds (37) superposés qui définissent alternativement une ouverture de passage située à l'intérieur et une autre à l'extérieur.

15. Installation à sorption selon l'une quelconque des revendications 7 à 14, **caractérisée en ce que** le serpentin de refroidissement (24, 25) est au moins partiellement intégré dans la conduite pour la solution riche.

16. Installation à sorption selon l'une quelconque des revendications 7 à 15, **caractérisée en ce que** la cloison de déviation (34) forme la limite inférieure d'une chambre de tête (27) qui est intégrée dans la conduite pour la solution riche.

17. Installation à sorption selon la revendication 15, **caractérisée en ce que** la conduite de solution riche pénètre de façon tangente dans la chambre de tête (27).

18. Installation à sorption selon l'une quelconque des revendications 7 à 16, **caractérisée en ce que** la conduite pour la solution riche communique en aval de la pompe (19) avec la conduite (6) pour la solution pauvre par une conduite de dérivation (21) contrôlable.
